# EUROPEAN PATENT SPECIFICATION

(11) **EP 1 937 078 B1**
(45) Date of publication and mention of the grant of the patent: **14.02.2018**
(21) Application number: 06790790.7
(22) Date of filing: 03.10.2006
(51) Int. Cl.: A23G 1/00, A23G 1/30, A23G 1/46

(54) **HIGH MILK SOLID CHOCOLATE COMPOSITION**
SCHOKOLADENZUSAMMENSETZUNG MIT HOHEM MILCHFESTSTOFFANTEIL
COMPOSITION DE CHOCOLAT A HAUTE TENEUR EN MATIERES SECHES DU LAIT

(30) Priority: 12.10.2005 US 725979 P
(43) Date of publication of application: 02.07.2008
(73) Proprietor: Mondelez Canada, Inc., Toronto ON M8X 2X2 (CA)
(72) Inventor: SANDERS, Nigel, Hugh, Toronto, Ontario M6J 3L9 (CA)
(74) Representative: Wilson Gunn
(86) International application number: PCT/CA2006/001630
(87) International publication number: WO 2007/041830

(56) References cited:
- WO-A-02/45520
- CN-A- 1 276 165
- GB-A- 1 280 051
- US-A- 3 622 342
- US-A- 4 493 853
- LIANG B. AND HARTEL R.W.: 'Effects of Milk Powders in Milk Chocolate' J. DAIRY SCI. vol. 87, 2004, pages 20 - 31, XP003011804

## Description

### BACKGROUND OF THE INVENTION

The invention relates to a milk chocolate composition having a high milk solid content and a process for manufacturing same.

Due to the feeling of emotional well being often associated with eating chocolate and its health benefits, many people throughout the world enjoy consuming chocolate. Some of the most popular of chocolate products include milk chocolate.

In the case of milk chocolate, several nutritional benefits are desired by a consumer because of the content of milk. Milk is a complex biological fluid containing proteins, minerals, vitamins, enzymes, fats and sugar. Milk contains a high amount of fat which contributes to the quality of chocolate products, but which can detract from milk's nutritional value if excessively increased. However, it would be beneficial to increase the content of the nonfat nutritional value of milk in milk chocolate, particularly if done without increasing the milk fat content of the milk chocolate.

The composition of milk chocolate is defined by regulations in many countries, such that there may be minimum required levels of dry cocoa solids, dry milk solids, dry nonfat cocoa solids, milk fat and total fat for chocolate. For example, in the United States, milk chocolate must contain at least 12% milk solids and not less than 10% chocolate liquor according to the standard of identity. It is believed that the type of milk solids used is influential in determining the flavor of the end product.

For example, U.S. Pat. No. 6,635,303 to Youcheff, et al. discloses powdered milk solids having a free fatty acid profile which can be used to prepare milk chocolate. The flavor profile of the product disclosed by Youcheff, et al. has been described as cheesy, soured and with a "soapy" character. The unique flavor is achieved through use of a powdered milk solid having a free fatty acid profile wherein the weight ratio of butyric acid (C4) to myristic acid (C 14) is equal to or less than 1:2, e.g., 1:10,000, preferably 1:25 to 1:100 and most preferably 1:3 to 1:6. Youcheff, et al. allows ranges of 1% to 40% of the treated milk solids in combination with 0-30% of non-fat milk solids and 1-10% of milk fat, but does not disclose or suggest the use of relatively high amounts of milk solids. Further, Youseff, et al. specifically require use of treated milk solids.

WO 02/45520 describes a process for the preparation of chocolate crumb comprising mixing and heating from 15 to 70 % by weight of milk solids, with 10 to 75 % weight of sugar and 0.1 to 10 % by weight of milk or vegetable protein hydrolysates, the percentages being based on the weight of the mixture. CN 1276165 describes a calcium-enriched chocolate prepared from alkali extracted cocoa, oligofractose, emulsifier, calcium and VD3 through mixing, fine grinding, refining, mixing, regulating temp, shaping, cooling and packing, the chocolate being said to have a natural fruit smell and an ability to strengthen bone and teeth, and preventing osteoporosis. US 4,493,853 describes a chocolate product having increased protein content and decreased carbohydrate content, comprising substantially of a processed cheese and chocolate melt made perfectly homogeneous in a weight ratio of 1:1-1.5, being solid or semi-solid at environmental temperature.

However, there is no indication in Youcheff, et al. to provide a milk chocolate composition with improved nutritional value, resulting from, e.g., a higher milk content than conventional milk chocolate products. Indeed, to date the art of chocolate preparation and product manufacturing is singularly devoid of any manifest attempt to improve nutritional value by, for example, increasing the nutritional values found in milk without commensurately raising the level of milk fat in the product.

### SUMMARY

The milk chocolate composition contains greater than 40% natural milk solids by weight, wherein the milk chocolate composition contains a milk fat content of said milk solids that is not greater than 8% by weight of the composition, and other milk chocolate ingredients. Examples of milk chocolate ingredients can include cocoa liquor, cocoa butter, and sweetener.

In one embodiment, the milk chocolate composition contains greater than about 45%, preferably greater than about 48%, more preferably greater than about 50%, even more preferably greater than 55%, and most preferably greater than about 60%, milk solids by weight.

Milk solid includes milk fat solids and nonfat milk solids. The milk fat component of the milk solids is not greater than 8% by weight of the milk chocolate composition, preferably not greater than about 7.5% by weight, more preferably not greater than about 6% by weight, and most preferably not greater than about 5% by weight, of the milk chocolate composition.

The cocoa butter can be any cocoa butter known to those skilled in the art. In one embodiment, the cocoa butter is fat from cocoa nibs. In another embodiment, the cocoa butter is cocoa butter substitute. The cocoa butter substitute can comprise palm kernel fat. In yet another embodiment, the cocoa butter is cocoa butter equivalent.

The sweetener can be any sweetener known to those skilled in the art. In one embodiment, the sweetener is a natural sweetener, such as sucrose. In some embodiments, the sucrose is in an amount of not greater than 38% by weight of the milk chocolate composition, preferably not greater than about 35% by weight, more preferably not greater than about 30% by weight, even more preferably not greater than about 25% by weight, and still more preferably not greater than about 20% by weight, and most preferably not greater than about 18% by weight, of the milk chocolate composition.

In another aspect, a method is provided for preparing a milk chocolate composition as defined herein, and includes combining natural milk solids with other milk chocolate ingredients, wherein the milk solids is in an amount of greater than 40% by weight of the milk chocolate composition and the milk fat component of said milk solids is not greater than 8% by weight of the composition. In yet another aspect, a reduced-sugar milk chocolate composition which includes cocoa liquor, greater than 40% by weight natural milk solids, cocoa butter, and an added sweetener component in an amount of not greater than 38% by weight of the resulting milk chocolate composition is provided.

In another aspect, a milk chocolate composition prepared from ingredients comprising chocolate crumb in an amount of not greater than 70% by weight, wherein said composition contains greater than 40% natural milk solids by weight of all ingredients and the milk fat component of said milk solids is not greater than 8% by weight of the composition is provided. In some embodiments, the chocolate crumb is in the composition in an amount of not greater than about 65% by weight, preferably not greater than about 60%, more preferably not greater than about 55%, even more preferably not greater than about 50%, still more preferably not greater than about 45%, and most preferably not greater than about 40% by weight of the composition.

In a further aspect, an increased calcium content milk chocolate composition as defined herein which includes greater than 40% milk solids by weight, a milk fat component of said milk solids not greater than 8% by weight of the composition and other milk chocolate ingredients is provided. The increased calcium content milk chocolate composition contains at least 150 milligrams (mg) of calcium per serving, more preferably at least about 200 mg, even more preferably at least 250 mg, still more preferably at least 300 mg, even still more preferably at least 350 mg, and most preferably at least 400 mg of calcium per serving. Optimally, the milk chocolate composition contains at least about 500 mg of calcium per serving.

In yet a further aspect, a method is provided for delivering calcium to a human including human ingestion of a milk chocolate composition which includes greater than 40% by weight natural milk solids, wherein the milk chocolate composition contains at least about 150 mg of calcium per serving.

In another aspect, an increased protein content milk chocolate composition which includes greater than 40% by weight of milk solids, a milk fat component of said milk solids not greater than 8% by weight of the composition and other milk chocolate ingredients is provided. The increased protein milk chocolate composition contains at least 3.9 grams (g) of protein per serving, preferably, at least about 4 g, more preferably at least about 6 g, even more preferably at least about 8 g, still more preferably at least about 10 g, and most preferably at least about 12 g of protein per serving. Optimally, the milk chocolate composition contains at least about 15 g of protein per serving.

In another aspect, a method is provided for delivering milk proteins to a human including human ingestion of a milk chocolate composition comprising greater than 40% by weight natural milk solids, wherein the milk chocolate composition contains at least about 3.9 g of protein per serving.

As a result of the present invention, a milk chocolate composition is provided with increased nutritional value due to the increased milk content of the composition compared to conventional milk chocolate compositions. The increased milk solid content of the composition occurs without commensurately raising the level of milk fat in the product. The health benefit is further enhanced by significantly reducing the amount of natural sweetener required to produce a high quality chocolate product. Therefore, a more nutritious milk chocolate composition is provided, due to the increased milk protein levels, calcium level, etc. provided by milk solids in the milk chocolate product described herein.

### DETAILED DESCRIPTION

As used herein, the transitional term "comprising," (also "comprises," etc.) which is synonymous with "including," "containing," or "characterized by," is inclusive or open-ended and does not exclude additional, unrecited elements or method steps, regardless of its use in the preamble or the body of a claim.

Described herein is a milk chocolate composition which contains an increased amount of milk solids compared to that of conventional milk chocolate compositions. The milk chocolate composition includes greater than 40% by weight natural milk solids, and other milk chocolate ingredients wherein the milk chocolate composition contains a milk fat component of said milk solids that is not greater than 8% by weight of the composition. Other milk chocolate ingredients can include cocoa liquor, cocoa butter and sweetener.

Throughout this specification, certain parameters are defined by maximum and minimum amounts. Each minimum amount can be combined with each maximum amount to define a range for the given parameter.

### Milk Solids

Milk (i.e., liquid milk) is a complex biological fluid containing proteins (e.g., casein, whey, etc), fats (e.g., triacylglycerols, etc.), minerals (e.g., calcium, etc.), vitamins (vitamin D, etc.), enzymes (e.g., plasmin, lipase, etc.) and sugar (e.g., lactose). The milk can be fortified to increase, for example, the dietary intake of essential nutrients. For instance, milk can be sold with added vitamins such as vitamins A and D, or added minerals such as calcium.

The milk chocolate composition has greater than 40% by weight milk solids, preferably greater than about 45% by weight, more preferably greater than about 48% by weight, even more preferably greater than about 50% by weight, and most preferably greater than about 55% by weight, milk solids. Optimally, the milk chocolate composition has greater than 60% by weight milk solids.

The term "milk solids" as used herein refers to the mass (e.g., proteins, fats, minerals, vitamins, enzymes and sugar) remaining after removal of water in conventional liquid milk. Such remaining mass includes nonfat milk solids and milk fat solids. Thus, "milk solids" refers to the non-fat milk solids and the milk fat solids present in conventional liquid milk.

Conventional liquid milk refers to milk which is generally produced and purchased by a consumer for consumption. Examples of such conventional liquid milk includes whole milk, skim milk, nonfat milk, reduced- or low-fat milk, high-fat milk, and high-protein milk. For example, in the United States, whole milk generally contains about 8.25% milk solids by weight.

Milk solids useful in the compositions described herein are in the form of dry milk powder or conventional liquid milk. Since the milk solids useful in the compositions described herein are from conventional liquid milk, the milk solids utilized in the milk chocolate composition are referred to herein as "natural milk solids." Thus, the term "natural milk solids" excludes milk solids treated, for example, to create a selected fatty acid profile. Therefore, milk solids from treated milk, such as enzymatically treated milk in which the fats present in the milk have been subjected to an enzyme treatment which results in a fatty acid profile different than that occurring in "conventional milk," for the purposes of this specification, is not considered to be "natural milk solids."

A benefit of the milk chocolate compositions described herein is an increased amount of milk solids, without raising the amount of milk fat in the milk chocolate composition. Thus, the milk chocolate composition has a milk fat component that is not greater than 8% by weight of the milk chocolate composition, preferably not greater than about 7.5% by weight, more preferably not greater than about 6% by weight, and most preferably not greater than about 5% by weight, of the milk chocolate composition.

The increased amount of milk solids in the milk chocolate compositions described herein further provides an increase in the calcium content of the milk chocolate composition. Therefore, in one embodiment, an increased calcium content milk chocolate composition is provided.

The increased calcium content milk chocolate composition includes a milk chocolate composition as defined herein having greater than 40% by weight milk solids, a milk fat component of said milk solids not greater than 8% by weight of the composition and other milk chocolate ingredients. The other milk chocolate ingredients can include those described herein. The increased calcium content milk chocolate composition contains at least 150 mg of calcium per serving. Preferably, the milk chocolate composition contains at least about 200 mg, more preferably at least about 250 mg, even more preferably at least about 300 mg, still more preferably at least about 350 mg, and most preferably at least about 400 mg of calcium per serving. Optimally, the milk chocolate composition has at least about 500 mg of calcium per serving. The term "serving," for the purposes of this specification, means 40 g of the milk chocolate composition described herein.

In other embodiments, for commercial retail sale for purchase by a consumer, a finished milk chocolate composition product can weigh about 100 g. Therefore, in some embodiments, the increased calcium content milk chocolate composition contains a total amount of at least about 375 mg of calcium in 100 g of the finished product. Preferably, the milk chocolate composition contains at least about 500 mg, more preferably at least about 625 mg, even more preferably at least about 750 mg, still more preferably at least about 875 mg, and most preferably at least about 1000 mg of calcium in 100 g of the finished product. Optimally, the milk chocolate composition contains at least about 1250 mg of calcium in 100 g of the finished product.

A method for delivering calcium to a human is also disclosed The method includes human ingestion of a milk chocolate composition described herein. The term "calcium" as used herein refers to the mineral calcium which can be utilized by the body for its health benefits. Such health benefits include, but are not limited to, building and maintaining bones and teeth, blood clotting, the transmission of nerve impulses, and the regulation of the heart's rhythm.

The increased amount of milk solids in the milk chocolate compositions described herein moreover provides an increase in the protein content of the milk chocolate composition. Therefore, in another embodiment, an increased protein content milk chocolate composition is provided.

The increased protein content milk chocolate composition includes greaterthan 40% by weight milk solids, a milk fat component of the milk solids that is not greater than about 8% by weight of the composition and other milk chocolate ingredients. The other milk chocolate ingredients can include those described herein. The increased protein content milk chocolate composition contains at least 3.9 g of protein per serving. Preferably, the milk chocolate composition contains at least about 4 g, more preferably at least about 6 g, even more preferably at least about 8 g, still more preferably at least about 10 g, and most preferably at least about 12 g of protein per serving. Optimally, the milk chocolate composition contains at least about 15 g of protein per serving.

As indicated above, a finished milk chocolate composition product can weigh about 100 g. Thus, in some embodiments, the increased protein content milk chocolate composition contains a total amount of at least about 9.75 g of protein in 100 g of the finished product. Preferably, the milk chocolate composition contains at least about 10 g, more preferably at least about 15 g, even more preferably at least about 20 g, still more preferably at least about 25 g, and most preferably at least about 30 g of protein in 100 g of the finished product. Optimally, the milk chocolate composition contains at least about 37.5 g of protein in 100 g of the finished product.

A method for delivering milk protein to a human is also disclosed. The method includes human ingestion of a milk chocolate composition described herein. **Cocoa Liquor**

In some embodiments, the milk chocolate composition can include cocoa liquor. As used herein in this specification, the term "cocoa liquor" is synonymous with "cocoa mass." Cocoa liquor refers to the liquid or paste produced when unroasted or roasted cocoa bean nibs are ground.

The cocoa liquor can be prepared from cocoa bean nibs by any method known to those skilled in the art. For example, in typical processing operations, the nibs are roasted, and then ground, often with generation of heat. The grinding is generally done to provide a fineness in the mass such that little to no grittiness is felt in the mouth when consuming a product containing the cocoa liquor. The grinding is normally carried out in a series of mills to achieve the desired particle size. Such desired particle size can vary, and depends in part on, for example, the milk chocolate composition desired. The appropriate particle size can be readily determined by those skilled in the art.

The cocoa bean nibs can be processed with an alkali ingredient or a neutralizing agent during preparation of cocoa liquor. Such alkali ingredients include, for instance, ammonium bicarbonate, potassium bicarbonate, sodium bicarbonate, ammonium carbonate, potassium carbonate, sodium carbonate, ammonium hydroxide, potassium hydroxide, sodium hydroxide, magnesium carbonate, and magnesium oxide. Examples of neutralizing agents include phosphoric acid, citric acid and *L*-tartaric acid.

At room temperature, cocoa liquor is generally a thick solid mass. However, when heated above the melting point of the fat present in the cocoa liquor, the liquor forms a viscous, flowable slurry. Typical cocoa liquor contains about 50-58% fat and 42-50% cocoa solids, by weight. The moisture content of cocoa liquor is generally at a maximum of about 2.5% and has a pH typically within a range of about 5.2-6.0.

The cocoa liquor can be spiced, flavored, or seasoned to impart a desired taste to the cocoa liquor. Example of such suitable spices, flavors orseasoning agents include, vanilla, cinnamon, nutmeg, natural and artificial flavorings, ground whole nut meats, ground coffee, dried malted cereal extract, etc.

The minimum amount of cocoa liquor in the milk chocolate composition is at least about 10% by weight, preferably at least about 15% by weight, more preferably at least about 20% by weight, and more preferably at least about 25% by weight. The maximum amount of cocoa liquor in the milk chocolate composition is at most about 75% by weight, preferably at most about 70% by weight, more preferably at most about 65% by weight, and even more preferably at most about 60% by weight.

### Cocoa Butter

In some embodiments, the milk chocolate composition can include cocoa butter. The cocoa butter can be any cocoa butter known to those in the art. For example, the cocoa butter can be natural cocoa butter (i.e., isolated from cocoa mass), artificial cocoa butter (e.g., cocoa butter substitute, cocoa butter equivalent, etc.), or combinations thereof.

In one embodiment, cocoa butter refers to the fat isolated from cocoa mass. The cocoa butter can be isolated from cocoa mass by any method known to those skilled in the art. For example, cocoa butter is generally isolated from cocoa mass by mechanical pressing to physically "squeeze" cocoa butter from the cocoa mass. Cocoa butter from cocoa mass primarily contains triglyceride. The fatty acids present in cocoa butter include oleic acid, stearic acid, and palmitic acid.

In another embodiment, the cocoa butter is cocoa butter substitute (CBS). Cocoa butter substitute contains triglycerides. The triglycerides in cocoa butter substitute can be obtained from any suitable oil known to those skilled in the art, including, for example, coconut oil and palm kernel oil.

The cocoa butter substitute is generally manufactured by esterification of glycerol with food-grade fatty acids, such as coconut oil, palm kernel oil, or both. Suitable cocoa butter substitutes include CBS laurics, CBS nonlaurics, Caprenin(TM) (caprocaprylobehenin), and Salatrim(TM) which is a family of triacylglycerols having the physical properties of fat but with approximately half the calories. Salatrim(TM) is generally produced by the interesterification of highly hydrogenated vegetable oils with triacylglycerols of acetic, propionic and/or butyric acids. Other examples of cocoa butter substitutes include those disclosed in U.S. Pat. No. 5,932,275.

In yet another embodiment, the cocoa butter is cocoa butter equivalent. Equivalents are fats that behave like, and are compatible with, the fat obtained from cocoa mass. Cocoa butter equivalents generally contain the desired triglycerides in the appropriate proportions as natural cocoa butter. Thus, the chemical composition and physical properties of the equivalents typically resemble those of cocoa butter.

Cocoa butter equivalents are normally made from non-lauric fats. For example, cocoa butter equivalents can be produced from, inter alia, palm kernel oil and other specialty fats such as shea and illipe, by fractional crystallization or from edible beef tallow by acetone crystallization. Examples of cocoa butter equivalents suitable for use in the milk chocolate composition of the present invention include Coberine(TM) (vegetable oil from palm and shea), Choclin(TM) (vegetable oil from palm and shea), and the like. Other examples of cocoa butter equivalents include those disclosed in U.S. Pat. No. 5,210,241.

The amount of cocoa butter present in the milk chocolate composition depends, in part, on the particular cocoa butter utilized, and/or the combination of particular cocoa butter utilized. Such amounts can be readily determined by those skilled in the art.

Typically, the milk chocolate compositions described herein contain at least about 10% by weight, preferably at least about 13% by weight, more preferably at least about 15% by weight, and even more preferably at least about 17% cocoa butter by weight. The maximum amount of cocoa butter present in the milk chocolate composition is generally not more than 38% by weight, preferably not more than about 35% by weight, more preferably not more than about 30% by weight, and most preferably not more than about 27% cocoa butter by weight.

### Sweetener

In some embodiments, the milk chocolate composition may include a sweetener. The term "sweetener" as used herein refers to "added sweetener." "Added sweetener" as used herein refers to any sweetener that is added as an ingredient to obtain the milk chocolate composition of the present invention, and excludes sweeteners which are part of another component. For example, the sugar normally present in milk (e.g., milk solids) is not considered to be a sweetener (i.e., added sweetener) in accordance with the present invention.

The amount of sweetener employed in the milk chocolate composition described herein can be readily determined by those skilled in the art. For example, the amount of sweetener present in the milk chocolate composition described herein is generally not greater than about 55% by weight of the milk chocolate composition. Typically, the sweetener is present in the milk chocolate composition is an amount not greater than about 50% by weight, more typically, more greater than about 47% by weight, and even more typically not greater than about 45% by weight of the milk chocolate composition.

A milk chocolate composition generally contains sugar (sucrose) as the nutritive carbohydrate sweetener. As discussed above, milk solids generally contain the natural sweetener lactose. Since the milk chocolate composition of the invention contains an increased amount of milk solids (which contain lactose), less added sweetener (e.g., sucrose) is generally required in the present composition compared to that of conventional milk chocolate compositions. Therefore, less added sweetener, such as the addition of sucrose, is usually required, resulting in a milk chocolate composition having a reduced-sugar content.

For such reduced-sugar milk chocolate composition, the added sweetener, (e.g., sucrose) is generally present in the composition in an amount of not greater than about 38% by weight, preferably not greater than about 35% by weight, more preferably not greater than about 30% by weight, even more preferably not greater than about 25% by weight, yet even more preferably not greater than about 21 % by weight, and most preferably not greater than about 18% by weight. Optimally, the added sweetener, (e.g., sucrose) is present in the milk chocolate composition in an amount of not greater than about 16% by weight of the composition.

A reduced-sugar or sugar-free milk chocolate composition can also be obtained by partially or wholly replacing the sucrose added sweetener with one of more sweeteners described below.

Sugar (sucrose) is generally accepted as the baseline for comparison of sweeteners. The sucrose can be wholly or partially replaced with any sweetener having a higher sweetening power than sucrose.

For example, the sweetener having a higher sweetening power than sucrose can be selected from a wide range of materials, including natural sweeteners, water-soluble sweeteners, water-soluble artificial sweeteners, water-soluble sweeteners derived from naturally occurring water-soluble sweeteners, dipeptide based sweeteners, protein based sweeteners and bulking agents, including mixtures thereof. Without being limited to particular sweeteners, representative categories and examples of sweeteners include:
a) natural sweeteners such as monosaccharides, disaccharides, and polysaccharides such as xylose, ribulose, glucose (dextrose), mannose, galactose, fructose (levulose), maltose, lactose, inulin, polyfructose, polydextrose, fructooligosaccharides, and mixtures thereof.
b) water-soluble sweeteners such as dihydrochalcones, monellin, steviosides, glycyrrhizin, dihydroflavenol, and sugar alcohols such as lactitol, isomalt, sorbitol, mannitol, maltitol, xylitol, erythritol, and L-aminodicarboxylic acid aminoalkenoic acid ester amides, such as those disclosed in U.S. Pat. No. 4,619,834, and mixtures thereof;
c) water-soluble artificial sweeteners such as soluble saccharin salts, i.e., sodium or calcium saccharin salts, cyclamate salts, the sodium, ammonium or calcium slat of 3,4-dihydro-6-methyl-1,2,3-oxathiazine-4-one-2,2-dioxide, the potassium salt of 3,4-dihydro-6-methyl-1,2,3-oxathiazine-4-one-2,2-dioxide (Acesulfame-K), the free acid form of saccharin, and mixtures thereof;
d) dipeptide based sweeteners, such as L-aspartic acid derived sweeteners, such a L-aspartyl-L-Phenylalanine methyl ester (Aspartame), N-[N-(3,3-dimethylbutyl)-L-α-aspartyl]-L-phenylalanine 1-methyl ester (Neotame), and materials described in U.S. Patent No. 3,492,131, L-alphaaspartyl-N-(2,2,4,4-tetramethyl-3-thietanyl)-D-alaninamide hydrate (Alitame), methyl esters of L-aspartyl-L-phenylglycerine and L-aspartyl-L-2,5-dihydrophenyl-glycine,L-aspartyl-2,5-dihydro-L-phenylalanine; :-aspartyl-L-(1-cyclohexen)-alanine, and mixtures thereof;
e) water-soluble sweeteners derived from naturally occurring water-soluble sweeteners, such as chlorinated derivates of ordinary sugar (sucrose), e.g., chlorodeoxysugar derivatives such as derivatives of chlorodeoxysucrose or chlorodeoxygalactosucrose, known, for example, under the product designation of Sucralose; examples of chlorodeoxysucrose and chlorodeoxygalactosucrose derivatives include but are not limited to: 1-chloro-1'-deoxysucrose; 4-chloro-4-alpha-D-galactopyranosyl-alpha-D-fructofuranoside, or-4-chloro-4-deoxygalactosucrose; 4-chloro-4-deoxy-alpha-D-galactopyranosyl-1-chloro-1-deoxy-beta-D-fructo-furanoside, or 4,1'-dichloro-4,1'-dideoxygalactosucrose; 1',6'-dichloro-1',6',-dideoxysucrose; 4-chloro-4-deoxy-alpha-D-galactopyranosyl-1,6-dichloro-1,6-dideoxy-beta-D-fructofuranoside, or 4,1',6'-trichloro-4,1',6'-trideoxygalactosucrose; 4,6-dichloro-4,6-dideoxy-alpha-D-galactopyranosyl-6-chloro-6-deoxy-bate-D-fructofuranoside, or 4,6,6'-trichloro-4,6,6'-trideoxygalactosucrose; 6,1',6'-trichloro-6,1',6'-tridoexysucrose; 4,6-dichloro-4,6-dideoxy-alpha-D-galactopyranosyl-1,6-dichloro-1,6dideoxy-beta-D-fructofuranoside, or 4,6,1',6'-tetrachloro-4,5,1',6'-tetradeoxygalacto-sucrose; and 4,6,1',6'-tetradeoxy-sucrose, and mixtures thereof;
f) protein based sweeteners such as thaumaoccous danielli (Thaumatin I and II); and
g) bulking agents such as microcrystalline cellulose, invert sugar, partially hydrolyzed starch and corn syrup solids, and mixtures thereof.

The sweetener may be used in any physical form known in to those in the art to provide, for example, a prolonged sensation of sweetness. Without being limited thereto, such physical forms include free forms, such as spray dried, powdered, beaded forms, encapsulated forms, and mixtures thereof.

In general, an effective amount of sweetener may be utilized to provide the level of sweetness desired, and this amount may vary with the sweetener selected. The exact range of amounts for each type of sweetener can be readily determined by those skilled in the art.

### Additional Components

Additional components, such as viscosity improving agents and flavoring agents, can also be included in the milk chocolate compositions described herein. Such components can be used in amounts sufficient to achieve their intended effects.

Examples of viscosity improving agents include emulsifiers. Suitable emulsifiers include lecithin derived from soya bean, safflower, corn, etc, fractionated lecithins enriched with either phosphatidyl choline, phosphatidyl ethanolamine, phosphatidyl inositol, emulsifiers derived from oats, mono-and diglycerides, and their tartaric esters, monosodium phosphate derivatives of mono-and diglycerides of edible fats and oils, sorbitan monostearate, polyoxyethylene sorbitan monostearate, hydroxylated lecithin, synthetic phospholipids such as ammonium phosphatides, lactylated fatty acid esters of glycerol and propylene glycol, polyglyerol esters of fatty acids, propylene glycol mono- and diesters of fats and fatty acids, glyceryl monostearate, propylene glycol monostearate, and the like, and mixtures thereof.

The amount of emulsifier employed in the milk chocolate composition can be subject to such factors as the particular emulsifier used, the level of viscosity desired, etc. Thus, the amount of emulsifier can be varied in order to obtain the result desired in the milk chocolate composition. Such amounts can be readily determined by those skilled in the art. For example, the emulsifier can be employed in amounts from about 0.02% to about 5%, and more specifically from about 0.1% to about 2%, and even more preferably from about 0.5% to about 1.5%, by weight of the milk chocolate composition.

Flavoring agents which can be used include those flavors known to the skilled artisan, such as natural and artificial flavors. These flavorings may be chosen from synthetic flavor oils and flavoring aromatics and/or oils, oleoresins and extracts derived from plants, leaves, flowers, fruits, and so forth, and combinations thereof.

Nonlimiting representative flavor oils include spearmint oil, cinnamon oil, oil of wintergreen (methyl salicylate), peppermint oil, clove oil, bay oil, anise oil, eucalyptus oil, thyme oil, cedar leaf oil, oil of nutmeg, allspice, oil of sage, mace, oil of bitter almonds, and cassia oil. Also useful flavorings are artificial, natural and synthetic fruit flavorings such as vanilla, and citrus oils including lemon, orange, lime, grapefruit, and fruit essences including apple, pear, peach, graph, strawberry, raspberry, cherry, plum, pineapple, apricot and so forth.

The flavoring agents can be used in liquid or solid form, and can be used individually or in admixture. Commonly used flavors include mints such as peppermint, menthol, spearmint, artificial vanilla, cinnamon derivatives, and various fruit flavors, whether employed individually or in admixture.

Other useful flavorings include aldehydes and esters such as cinnamyl acetate, cinnamaldehyde, citral diethylacetal, dihydrocarvyl acetate, eugenyl formate, p-methylamisol, and so forth may be used. Generally, any flavoring or food additive such as those described in Chemicals Used in Food Processing, publication 1274, pages 63-258, by the National Academy of Sciences, can be used. This may include natural as well as synthetic flavors.

Further examples of aldehyde flavorings include but are not limited to acetaldehyde (apple), benzaldehyde (cherry, almond), anisic aldehyde (licorice, anise) cinnamic aldehyde (cinnamon), citral, i.e., alpha-citral (lemon, lime), neral, i.e., beta-citral (lemon, lime), decanal (orange, lemon), ethyl vanillin (vanilla, cream), heliotrope, i.e., piperonal (vanilla, cream), vanillin (vanilla, cream), alpha-amyl cinnamaldehyde (spicy fruity flavors), butyraldehyde (butter, cheese), valeraldehyde (butter, cheese), citronellal (modifies, many types), decanal (citrus fruits), aldehyde C-8 (citrus fruits), aldehyde C-9 (citrus fruits), aldehyde C-12 (citrus fruits), 2-ethyl butyraldehyde (berry fruits), hexenal, i.e., trans-2 (berry fruits), tolylaldehyde (cherry, almond), veratraldehyde (vanilla), 2,6-dimethyl-5-heptenal, i.e., melonal (melon), 2,6-dimethyloctanal (green fruit), and 2-dodecenal (citrus, mandarin), cherry, grape, blueberry, blackberry, strawberry shortcake, and mixtures thereof.

The flavorings agents can be employed in any form known to those in the art. For example, the flavoring agents can be used in either liquid form and/or dried form. When employed in dried form, suitable drying means, such as spray drying can be used. Alternatively, the flavoring agents can be absorbed onto water soluble materials, such as cellulose, starch, sugar, maltodextrin, gum arabic and so forth or can be encapsulated. The actual techniques for preparing such dried forms are well-known to those skilled in the art.

The amount of flavoring agent employed herein can depend on various factors, such as the type of milk chocolate composition desired, the individual flavor used, and the strength of flavor desired. Thus, the amount of flavoring can be varied in order to obtain the result desired in the final product. Such variations are within the capabilities of those skilled in the art without the need for undue experimentation.

For example, flavorings agents can be present in the milk chocolate composition from generally about 0.02% to about 5%, and more specifically from about 0.1% to about 2%, and even more specifically from about 0.8% to about 1.8%, by weight of the milk chocolate composition.

### Method for Preparing Milk Chocolate Composition

In another embodiment, a method for preparing a milk chocolate composition is provided. The method includes combining natural milk solids with other milk chocolate ingredients, wherein the natural milk solids is in an amount of greater than 40% by weight of the milk chocolate composition and wherein the milk fat component of the milk solids is not greater than about 8% by weight of the composition. The natural milk solids and other milk chocolate ingredients include those described above. As indicated above, the natural milk solids can be in the form of dry milk powder or liquid milk.

The natural milk solids can be combined with the other milk chocolate ingredients by any method know to those skilled in the art. The method of combining the natural milk solids with the other milk chocolate ingredients (e.g., cocoa liquor, cocoa butter and sweetener) is not critical, forms no part of the invention, and can be performed in any manner so long as the milk chocolate composition contains greater than 40% natural milk solids by and the milk fat component of the milk solids is not greater than about 8% by weight of the composition. Suitable methods for combining milk solids with the other milk chocolate ingredients are well known to those skilled in the art, and include for example a food grade blender, a mixer, etc.

For example, typically natural milk solids are combined with a sweetener and cocoa liquor to form a chocolate mass. The chocolate mass is generally then subjected to a grinding process to obtain appropriate sized particles of chocolate mass. Next, cocoa butter is usually added to the chocolate mass, and the mixture is then subjected to a conching process.

The natural milk solids, sweetener and cocoa liquor can be combined and dried to form a chocolate crumb. Due to the Maillard reaction, a caramel flavor is developed during the drying process. Generally, the chocolate crumb is dried to a moisture content of about 1 %. The chocolate crumb can be used to prepare a milk chocolate composition described herein.

Thus, in another embodiment, a milk chocolate composition is prepared from ingredients comprising chocolate crumb in an amount of not greater than 70% by weight, wherein said composition contains greater than 40% natural milk solids by weight of all ingredients and the milk fat component of said milk solids is not greater than 8% by weight of the composition. Preferably, the chocolate crumb is in the composition in an amount of not greater than about 65% by weight, preferably not greater than about 60%, more preferably not greater than about 55%, even more preferably not greater than about 50%, still more preferably not greater than about 45%, and most preferably not greater than about 40% by weight of the composition.

The features and advantages of the compositions described herein are more fully shown by the following examples which are provided for purposes of illustration, and are not to be considered as limiting the invention in any way.

### EXAMPLES

### EXAMPLE 1

### High Milk Content Milk Chocolate Composition

Milk chocolate compositions having the ingredients listed in Table 1 are prepared. Values are given in weight percentages.

**Table 1: Composition of Milk Chocolate Products**

| Ingredient (% w/w) | Typical Conventional Recipe | Chocolate Product (A) | Chocolate Product (B) | Chocolate Product (C) |
|---|---|---|---|---|
| Milk Chocolate Crumb | 70-90 | 37.00 | 29.00 | 0.00 |
| Cocoa Butter | 10-30 | 16.50 | 20.90 | 20.20 |
| Emulsifier (Soy Lecithin) | 0.50 | 0.50 | 0.50 | 0.50 |
| Flavor | 0.10 | 0.10 | 0.10 | 0.10 |
| Skim Milk Powder | | 36.50 | 41.60 | 44.70 |
| Butter Oil | | 3.80 | 1.00 | 7.50 |
| Sugar | | 0.00 | 0.00 | 17.10 |
| Cocoa liquor | | 5.50 | 5.60 | 9.80 |

| | | | | |
|---|---|---|---|---|
| ^{a} Chocolate crumb contains milk solids, cocoa mass (cocoa liquor) and sweetener. | | | | |

The weight percentage of milk solids and cocoa solids present in each of the above milk chocolate compositions is shown in Table 2 below.

**Table 2: Weight Percentage of Milk Solids in Milk Chocolate Products**

| Ingredient (% w/w) | Typical Conventional Recipe | Chocolate Product (A) | Chocolate Product (B) | Chocolate Product (C) |
|---|---|---|---|---|
| Milk Powder Equivalents^{a} | 18.50 | 44.80 | 48.40 | 44.70 |
| Butter Oil^{b} | 7.50 | 7.20 | 4.00 | 7.50 |
| **Total Milk Solids^{c}** | **26.00** | **52.00** | **52.40** | **52.20** |

| | | | | |
|---|---|---|---|---|
| ^{a} Milk powder equivalents = milk solids from chocolate crumb + milk solids from skim milk powder. ^{b} Milk fat is calculated from the milk fat solids of chocolate crumb and the butter oil in the milk chocolate product. ^{c} The percentage of total milk solids is the sum of milk powder equivalents and milk fat. | | | | |

As shown in Table 2, milk chocolate products A, B and C (examples of the milk chocolate compositions described herein) contain at least 52% milk solids by weight. Therefore, the milk solid content of a milk chocolate composition described therein contains twice the milk solid content of the conventional milk chocolate composition.

Next, the sugar content of the milk chocolate compositions are examined. Table 3 lists the percentage of sugar in the milk chocolate compositions.

**Table 3: Percentage of Sugar in Milk Chocolate Compositions**

| Ingredient (% w/w) | Typical Conventional Recipe | Chocolate Product (A) | Chocolate Product (B) | Chocolate Product (C) |
|---|---|---|---|---|
| Sucrose^{a} | 46.00 | 20.50 | 16.00 | 17.10 |
| Lactose^{b} | 9.70 | 23.30 | 24.60 | 23.20 |
| **Total Sugars^{c}** | **55.30** | **43.80** | **40.60** | **40.30** |
| % Less Sucrose than Conventional Product | | 55.40 | 65.20 | 62.80 |
| % Less Total Sugars than Conventional Product | | 20.80 | 26.60 | 27.10 |

| | | | | |
|---|---|---|---|---|
| ^{a} Percentage of sucrose is calculated from sucrose present in chocolate crumb and sugar. ^{b} Lactose calculated from amount of lactose present in skim milk powder and milk of chocolate crumb. ^{c} Percentage of total sugar is the sum of sucrose and lactose. | | | | |

As shown in Table 3, milk chocolate products A, B and C contain substantially less sucrose and less sugar that a conventional milk chocolate composition. Therefore, the milk chocolate compositions described therein, in addition to having a higher milk solid content, also have a significantly reduced-sugar content.

The milk chocolate compositions described therein provide an increase in nutritional value over conventional milk chocolate compositions. Thus, the sucrose load is reduced by at least fifty percent, and the total sugar load is reduced by at least twenty percent. This is accomplished while maintaining the overall organoleptic quality of the chocolate product, and while increasing the non-fat milk solid values of the product without commensurately increasing the milk fat solid content- a truly surprising and beneficial result!

## Claims

1. A milk chocolate composition comprising greater than 40% natural milk solids by weight and other milk chocolate ingredients, wherein the milk chocolate composition contains a milk fat component of said milk solids that is not greater than 8% by weight of the composition.

2. An increased calcium content milk chocolate composition comprising a milk chocolate composition according to claim 1, wherein the composition further contains at least 150 mg of calcium per 40g of the milk chocolate composition.

3. An increased protein content milk chocolate composition comprising a milk chocolate composition according to claim 1, wherein the composition further contains at least 3.9g of protein per 40g of the milk chocolate composition.

4. A milk chocolate composition according to claim 1 prepared from ingredients comprising chocolate crumb in an amount of not greater than 70% by weight.

5. A milk chocolate composition according to claim 1, further comprising: a) cocoa liquor; b) cocoa butter; and c) a sweetener in an amount of not greater than 38% by weight of the resulting milk chocolate composition.

6. A method for preparing a milk chocolate composition according to claim 1, comprising combining natural milk solids with other milk chocolate ingredients.

7. A composition or method according to any preceding claim, wherein the other milk chocolate ingredients comprise one or more ingredients selected from cocoa butter, a sweetener, and cocoa liquor.

8. A composition or method according to claim 7, where the sweetener comprises a nutritive sweetener.

9. A composition or method according to claim 8, wherein the nutritive sweetener is sucrose.

10. A composition or method according to any of claims 7-9, wherein the sweetener is in an amount of not greater than 38% by weight of the composition.

## Patentansprüche

1. Milchschokoladenzusammensetzung umfassend mehr als 40 Gew.-% natürliche Milchfeststoffe und andere Milchschokoladenbestandteile, wobei die Milchschokoladenzusammensetzung eine Milchfettkomponente der Milchfeststoffe von nicht mehr als 8 Gew.-% der Zusammensetzung enthält.

2. Milchschokoladenzusammensetzung mit erhöhtem Calciumgehalt, umfassend eine Milchschokoladenzusammensetzung nach Anspruch 1, wobei die Zusammensetzung des Weiteren zumindest 150 mg Calcium je 40 g der Milchschokoladenzusammensetzung enthält.

3. Milchschokoladenzusammensetzung mit erhöhtem Proteingehalt, umfassend eine Milchschokoladenzusammensetzung nach Anspruch 1, wobei die Zusammensetzung des Weiteren zumindest 3,9 g Protein je 40 g der Milchschokoladenzusammensetzung enthält.

4. Milchschokoladenzusammensetzung nach Anspruch 1, hergestellt aus Bestandteilen, die Schokoladenkrümel in einer Menge von nicht mehr als 70 Gew.-% umfassen.

5. Milchschokoladenzusammensetzung nach Anspruch 1, des Weiteren umfassend: a) Kakaomasse; b) Kakaobutter; und c) einen Süßstoff in einer Menge von nicht mehr als 38 Gew.-% der resultierenden Milchschokoladenzusammensetzung.

6. Verfahren zur Herstellung einer Milchschokoladenzusammensetzung nach Anspruch 1, umfassend das Kombinieren von natürlichen Milchfeststoffen mit anderen Milchschokoladenbestandteilen.

7. Zusammensetzung oder Verfahren nach einem der vorhergehenden Ansprüche, wobei die anderen Milchschokoladenbestandteile einen oder mehrere Bestandteile umfassen, die aus Kakaobutter, einem Süßstoff und Kakaomasse ausgewählt sind.

8. Zusammensetzung oder Verfahren nach Anspruch 7, wobei der Süßstoff ein nährwerthaltiger Süßstoff ist.

9. Zusammensetzung oder Verfahren nach Anspruch 8, wobei der nährwerthaltige Süßstoff Sucrose ist.

10. Zusammensetzung oder Verfahren nach einem der Ansprüche 7 bis 9, wobei der Süßstoff in einer Menge von nicht mehr als 38 Gew.-% der Zusammensetzung vorliegt.

## Revendications

1. Composition de chocolat au lait comprenant plus de 40% de matières solides naturelles du lait en poids et d'autres ingrédients de chocolat au lait, la composition de chocolat au lait contenant un constituant de matière grasse du lait, des matières solides du lait, qui ne représente pas plus de 8% en poids de la composition.

2. Composition de chocolat au lait à teneur accrue en calcium comprenant une composition de chocolat au lait suivant la revendication 1, la composition contenant, en outre, au moins 150 mg de calcium par 40 g de la composition de chocolat au lait.

3. Composition de chocolat au lait à teneur accrue en protéine comprenant une composition de chocolat au lait suivant la revendication 1, la composition contenant, en outre, au moins 3,9 g de protéine par 40 g de la composition de chocolat au lait.

4. Composition de chocolat au lait suivant la revendication 1, préparée à partir d'ingrédients comprenant
de la miette de chocolat en une quantité
non supérieure à 70% en poids.

5. Composition de chocolat au lait suivant la revendication 1, comprenant, en outre : a) de la liqueur de cacao, b) du beurre de cacao et c) un édulcorant en une quantité ne représentant pas plus de 38% du poids de composition du chocolat au lait résultante.

6. Procédé de préparation d'une composition de chocolat au lait suivant la revendication 1, comprenant la combinaison de matières solides naturelles du lait à d'autres ingrédients du chocolat au lait.

7. Composition ou procédé suivant l'une quelconque des revendications précédentes, dans lequel les autres ingrédients du chocolat au lait comprennent un ou plusieurs ingrédients choisis parmi le beurre de cacao, un édulcorant et la ligueur de cacao.

8. Composition ou procédé suivant la revendication 7, dans lequel l'édulcorant comprend un édulcorant nutritif.

9. Composition ou procédé suivant la revendication 8, dans lequel l'édulcorant nutritif est du saccharose.

10. Composition ou procédé suivant l'une quelconque des revendications 7 à 8, dans lequel l'édulcorant est présent en une quantité n représentant pas plus de 38% du poids de la composition.
